# EUROPÄISCHE PATENTSCHRIFT

(11) **EP 1 098 486 B1**
(45) Veröffentlichungstag und Bekanntmachung des Hinweises auf die Patenterteilung: **12.09.2007**
(21) Anmeldenummer: 00123983.9
(22) Anmeldetag: 03.11.2000
(51) Int. Cl.: G06F 17/30, H04L 29/08, G07F 7/10

(54) **Caching-Verfahren und Cachesystem**
Caching method and cache system
Méthode et système de cache

(30) Priorität: 05.11.1999 DE 19953532
(43) Veröffentlichungstag der Anmeldung: 09.05.2001
(73) Patentinhaber: media transfer AG, 64293 Darmstadt (DE)
(72) Erfinder: Oswald, Ludwig, 64665 Alsbach-Hähnlein (DE)
(74) Vertreter: KEIL & SCHAAFHAUSEN Patentanwälte

(56) Entgegenhaltungen:
- WO-A-99/04345
- WO-A-99/45491

## Beschreibung

Die Erfindung betrifft ein Caching-Verfahren zum Übertragen von aus großen Datenmengen bestehenden Objekten, insbesondere Multi-Mefdia-Objekten oder dgl., über ein Kommunikationsnetz wie bspw. das Internet, Intranet oder Extranet, bei dem die Objekte von wenigstens einem Content-Provider-Server zur Verfügung gestellt, in jeweils einem Lieferserver mit einem Objekt-Cache zwischengespeichert und zu beliebigen Empfängern übertragen werden, und ein Cachesystem zur Durchführung des Caching-Verfahrens.

Ein solches Caching-Verfahren ist z.B. bekannt aus WO 99/04345.

Die Digitalisierung im Video-, Audio- bzw. Multi-Media-Bereich und die schnelle Verbreitung von kommunikationsfähigen Personalcomputern im privaten wie im geschäftlichen Bereich führen zu einem hohen Telekommunikationsaufkommen, das durch die herkömmliche Internet-Technik nur noch bedingt zu bewältigen ist. Entweder führen viele parallele Zugriffe auf einen Server-Standort zu Kommunikationsengpässen, die zu nicht akzeptablen Antwortzeiten führen, oder es werden identische Server und Datenbanken mehrmals an verschiedenen Standorten aufgebaut, was zu hohen Investitions- und Betriebskosten führt. Beide Maßnahmen sind nicht beliebig skalierbar und können das oben geschilderte Problem nicht lösen. Zudem sind die existierenden Caching-Verfahren nicht besonders effizient, da diese die Objekte nicht strukturiert cachen, sondern wahllos HTML-Seiten speichen. Eine Verschlüsselung der Multi-Media-Objekte kann nicht erfolgen. Außerdem ist nicht gewährleistet, dass die gespeicherten Seiten aktuell sind.

Zur Bewältigung des hohen Telekommunikationsaufkommens an den Servern und im Backbone-Netz werden zum Verteilen von Massendaten derzeit zwei Verfahren angewandt:

Bei dem Proxy-Verfahren wird der Proxy als Zwischenglied in die Kommunikationsverbindung zwischen Empfänger und Server eingebunden. Der Proxy verhält sich gegenüber dem Empfänger als Pseudo-Server und gegenüber dem Server als Pseudoempfänger. Der Proxy speichert von ihm transportierte Objekte in seinem Cachespeicher temporär ab. Fordert der Empfänger vom Server ein Objekt an, das bereits zu einem früheren Zeitpunkt angefordert wurde, so liefert der Proxy als Pseudo-Server das Objekt aus seinem Cachespeicher zum Empfänger, anstatt es erneut vom Server anzufordern. Ein Nachteil dieser Proxy-Technologie liegt darin, dass die Objekte, die der Proxy aus seinem Cachespeicher zum Empfänger übergibt, veraltet sein können, wenn das Objekt auf dem (Original-)Server zwischenzeitlich aktualisiert wurde, der Proxy davon aber keine Kenntnis erhält. Auch hat der Eigentümer der Objekte keine Kontrolle über die Weitergabe oder Manipulation der Inhalte der Cachespeicher auf den Proxy, was zu Urheberrechtsverletzungen führen kann.

Bei dem Push-Caching-Verfahren werden Daten ohne weiteres Zutun der Empfänger von Servern zu den Empfängern übertragen. Hierbei entscheidet der Hauptserver, in welcher Region der Kommunikationsinfrastruktur seine Inhalte auf den Push-Cache-Servern dupliziert werden. Anfragen der Empfänger an den Hauptserver werden dann zu den aktualisierten Push-Cache-Servern umgeleitet. Hierbei ist besonders nachteilig, dass die Hauptserver dupliziert und alle Informationen an allen Standorten vorrätig gehalten werden müssen. Bei Änderungen müssen alle Push-Cache-Server geändert werden. Eine zentrale Erfassung von Daten, wie bspw. Billingdaten oder Statistikdaten, ist nicht möglich. Außerdem müssen zentral erfaßte Daten wie Objektdaten (Metadaten), Kundendaten oder Schlüssel zum Verschlüsseln auf allen Servern eingegeben werden.

Aufgabe der vorliegenden Erfindung ist es daher, ein Caching-Verfahren der eingangs genannten Art und ein Cachesystem zur Durchführung des Caching-Verfahrens zu schaffen, bei dem unter Vermeidung der oben aufgezeigten Nachteile ein sicherer, schneller und kostengünstiger Transport von aus großen Datenmengen bestehenden Objekten, insbesondere Multi-Media-Objekten, über ein Kommunikationsnetz unterstützt wird.

Diese Aufgabe wird durch ein Verfahren gemäß Anspruch 1 und einem Cachesystem gemäß Anspruch 14 gelöst, so dass ein zentraler Informationsserver vorgesehen ist, auf dessen Datenbanken mit Ausnahme der eigentlichen Objekte alle zur Durchführung des Caching-Verfahrens notwendigen Informationen eingestellt, verwaltet und gespeichert werden, wobei es sich bei den Informationen einerseits um Metadaten handelt, die es ermöglichen, ein Objekt auszuwählen, zu verwalten und zu verteilen, und andererseits um Betriebsdaten, insbesondere Lieferserverdaten, Benutzerdaten, Billingdaten, Statistikdaten, Systemdaten, Content-Provider-Daten und Sicherheitsdaten, dass die Objekte und die Metadaten der Objekte auf dezentralen Content-Provider-Servern erfaßt, bearbeitet und gespeichert werden, dass die vom Content-Provider-Server eingestellten Metadaten über einen Kommunikationskanal zum Informationsserver übertragen und aktualisiert werden, dass der Informationsserver den Auftrag zur Übertragung eines Objektes entgegennimmt, auswertet und die zum Liefern des Objektes notwendigen Informationen zusammenstellt und über einen Kommunikationskanal zu einem ausgewählten Lieferserver überträgt, dass der Lieferserver die Auftragsdaten annimmt und den Auftrag auswertet, dass der Lieferserver für den Fall, dass das zu versendende Objekt in seiner aktuellen Fassung im Objekt-Cache des Lieferservers verfügbar ist, dieses über einen Kommunikationskanal zu dem Empfänger überträgt und dass für den Fall, dass das zu versendende Objekt nicht oder nicht in seiner aktuellen Fassung im Objekt-Cache des Lieferservers verfügbar ist, der Lieferserver über einen Kommunikationskanal das Objekt von dem Content-Provider-Server anfordert und über einen Kommunikationskanal zum Empfänger weiterleitet.

Der zentrale Informationsserver ermöglicht, systemweite Daten zentral einzustellen, zu verwalten und zu aktualisieren, ohne die dezentrale Inhaltsverwaltung der Objekte und ihre Verteilungsstruktur zu beeinträchtigen. Da nur objektorientierte Metadaten, nicht aber die großen Datenmengen der Objekte selbst auf dem Informationsserver gespeichert werden, lässt sich eine einfache und zentrale Verwaltung aller Objekte auf einem einzigen Server mit einem im Vergleich zur Größe der verwalteten Objekte kleinen und kostengünstigen Speicher realisieren. Von dem zentralen Informationsserver werden zu dem jeweiligen Lieferserver nur Auftragspakete, d.h. Datenpakete kleiner Größe, verschickt, die das Kommunikationsnetz nur wenig belasten und einen schnellen und kostengünstigen Transport von großen Objekten ermöglichen. Große Datenmengen müssen nur über die kurze Verbindung zwischen Lieferserver und Empfänger transportiert werden. Dadurch wird auch die Übertragungssicherheit erhöht, da Datenmanipulationen in der Regel nur noch auf einem kurzen, direkten Verbindungsweg zwischen Lieferserver und Empfänger möglich sind. Die objektorientierten Metadaten ermöglichen eine automatische Aktualisierung des Verteilungssystems, womit sichergestellt ist, dass im gesamten System nur aktuelle Objekte geliefert werden.

Darüber hinaus müssen zentral erfasste Daten, wie Informationen zu den Objekten, Empfängerdaten oder Schlüssel zum Verschlüsseln der Daten, nicht auf viele verschiedene Server verteilt werden. Im Gegensatz zu bereits bestehenden Caching-Verfahren, bei denen in der Regel nur der Zugriff auf ganze HTML-Seiten möglich ist, kann durch die objektorientierte Speicherung von Metadaten gezielter auf die interessierenden Objekte zugegriffen werden.

Erfindungsgemäß werden die Metadaten der Objekte durch den Content-Provider-Server eingestellt, über einen Kommunikationskanal zum Informationsserver übertragen und dort abgelegt, aktualisiert und weiterverarbeitet. Auf diese Weise kann der Contentprovider, der als der Rechte- oder Lizenzinhaber der Objekten verstanden wird, alle Informationen über seine Objekte selbst erstellen und bearbeiten. Auch kann er entscheiden, wann ein Objekt durch den zentralen Informationsserver zur Verteilung freigegeben wird oder wieder gelöscht werden soll.

Um eine Identifizierung der Objekte zu ermöglichen, enthalten die Metadaten erfindungsgemäß objektorientierte Daten in Form von Objektreferenznummern, Versionsangaben, Servicevorgaben, Schlüssel zum Verschlüsseln der Objekte, Textbeschreibungen der Objekte, Verkaufspreise und dgl. Informationen über die Objekte.

Gemäß einer Ausgestaltung der Erfindung werden auf dem zentralen Informationsserver die vom System unterstützten Dienste festgelegt, denen jeweils eindeutige Servicenummern zugeordnet werden.

Gemäß einer weiteren Ausgestaltung der Erfindung sind Contentprovider-spezifische Dienste und Contentprovider-übergreifende Dienste vorgesehen, von denen letztere sich gemeinsame Ressourcen wie Empfängerverwaltung, Billing, Statistikbearbeitung und Caching-Algorithmen teilen. Zweckmäßigerweise sind dabei die Daten der einzelnen Contentprovider gegeneinander abgegrenzt.

Über die Versionsangabe, die als Versionsnummer oder als Erstellungsdatum und -uhrzeit des Objektes vorgesehen sein kann, lässt sich die Aktualität des Systems einfach bestimmen. Mit Hilfe von Servicevorgaben kann der Contentprovider ferner festlegen, welche Dienste für sein Objekt vorgesehen sein sollen. Weitere Informationen über das Objekt können bspw. das Datenformat des Objektes sein (wie MPEG, GIF, MP3, etc.), um eine Speicherung der Metadaten nach Objektklassen auf dem Informationsserver zu ermöglichen, die einen schnellen Zugriff auf die jeweiligen Metadaten der Objekte ermöglichen.

Zur eindeutigen Identifizierung des Objektes und des Auftrages enthält das von dem Informationsserver zu dem Lieferserver geschickte Auftragspaket eine Objektreferenznummer, eine Servicenummer, eine Versionsangabe, einen Schlüssel zum Verschlüsseln des Objektes, eine Kommunikationsadresse des Content-Provider-Servers, eine Kommunikationsadresse des Empfängers und/oder je nach Dienstanforderungen weitere Informationen.

Vorzugsweise ist die Auswahl des Lieferservers voreingestellt oder erfolgt dynamisch nach definierten Kriterien. Wenn ein Lieferserver nicht erreichbar oder ausgefallen sein sollte, lassen sich damit alternative Lieferserver auswählen. Mögliche Kriterien für die Auswahl des Lieferservers sind u.a. die geografische Nähe zum Endbestimmungsort (Empfänger), die Lieferkosten, die verfügbare Bandbreite am Lieferserver.

Vorzugsweise erfolgt die Datenübertragung über Kommunikationskanäle zwischen dem Informationsserver, den Content-Provider-Servern und/oder den Lieferservern verschlüsselt. Damit wird die Datensicherheit erhöht.

Ferner können die Objekte durch den Contentprovider verschlüsselt werden, so dass außerhalb des Content-Provider-Servers auftauchende Objekte nur mit dem speziellen Contentproviderschlüssel entschlüsselt werden können. Da dieser Schlüssel normalerweise nur von dem Lieferserver an den Empfängern gegeben wird, kann ein missbräuchlicher Gebrauch der Objekte erschwert werden. Zur Sicherheit des Empfängers kann das Objekt von dem Lieferserver auch mit einem persönlichen Schlüssel des Empfängers verschlüsselt werden, der bspw. von dem zentralen Informationsserver erstellt und sowohl dem Empfängern als auch dem Lieferserver separat zugesandt wird.

In Weiterbildung dieses Erfindungsgedankens werden die Objekte vom Lieferserver mit einem Wasserzeichen oder Fingerprint des Contentproviders, des Systembetreibers und/oder des Empfängers versehen. Die Wasserzeichen können vom Empfänger nicht gelöscht werden. Damit kann stets nachvollzogen werden, von wem das Objekt stammt, wer es transportiert und wer es empfangen hat.

Zur Kontrolle und Überwachung der Übertragung kann der Lieferserver nach Durchführung eines Auftrags dem zentralen Informationsserver über einen Kommunikationskanal ein Quittungspaket mit dem Status des Auftrags und/oder weiteren Informationen, bspw. Billinginformationen senden. Auf diese Weise kann der Informationsserver zentral Statistikinformationen oder Rechnungen zusammenstellen, die anderen Servern, bspw. dem Content-Provider-Server, zur Verfügung gestellt werden.

Ferner bezieht sich die Erfindung auf ein Cachesystem zur Übertragung von aus großen Datenmengen bestehenden Objekten über ein Kommunikationsnetz mittels des oben beschriebenen Verfahrens. Das Cachesystem ist erfindungsgemäß gekennzeichnet durch einen zur Steuerung eines Lieferservers bestimmten Informationsserver mit einem Betriebsdatenspeicher und einem Metadatenspeicher, mindestens einen einen Objektspeicher aufweisenden Content-Provider-Server zum Erzeugen und Vorhalten der Objekte und mindestens einen mit dem Content-Provider-Server über einen Kommunikationskanal verbundenen Lieferserver zum Zwischenspeichern der Objekte in einem Objekt-Cache und zum Versenden der Objekte zu einem Empfänger.

Vorteilhafterweise weist der Informationsserver ein Systemterminal zum Eingeben und Verwalten der Systemdaten auf.

Zweckmäßigerweise sind der Informationsserver, der Content-Provider-Server und der Lieferserver jeweils über Kommunikationskanäle miteinander verbunden. Damit kann ein Content-Provider-Server Metadaten direkt an den Informationsserver und dieser Auftragsdaten an einen Lieferserver bereitstellen und bearbeiten.

In Weiterbildung der Erfindung weist der Content-Provider-Server einen Metadatenspeicher auf, in dem die Daten vor der Übertragung zum Informationsserver zusammengestellt und aufbereitet werden können.

Zum Ver- und Entschlüsseln der zu übertragenden Daten können der Informationsserver, die Lieferserver und/oder die Content-Provider-Server Schlüsseleinheiten aufweisen.

Zur Bewältigung größerer Datenmengen oder zur Beschleunigung der Bearbeitungszeit können der Informationsserver, der Content-Provider-Server und/oder der Lieferserver erfindungsgemäß jeweils aus einem Cluster von Einzelservern bestehen.

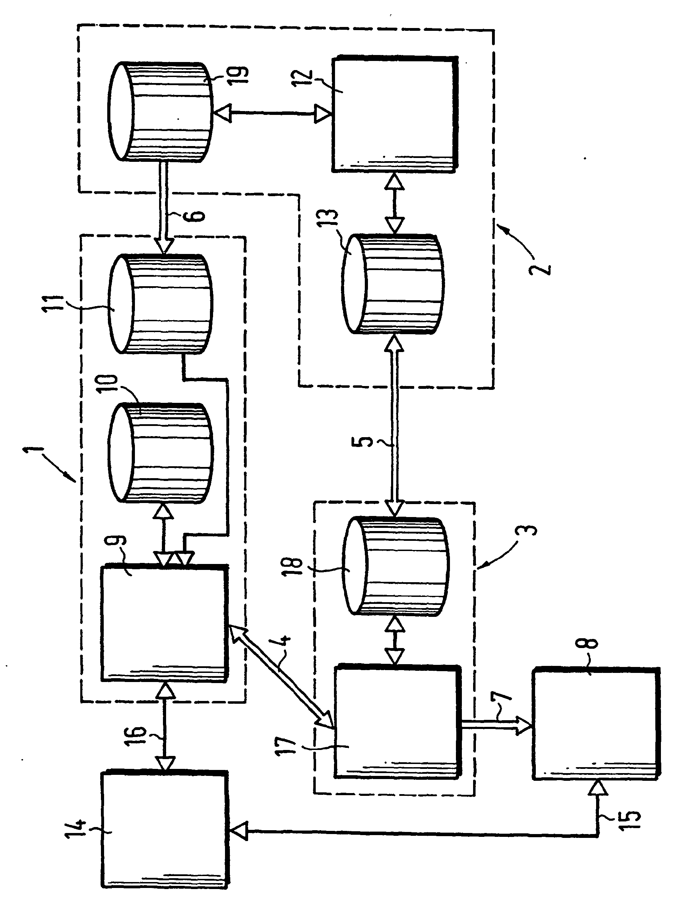

Weiterbildungen, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellen Merkmale für sich oder in beliebiger Kombination den Gegenstand der Erfindung, unabhängig von ihrer Zusammenfassung in den Ansprüchen oder deren Rückbeziehung.

Die einzige Figur zeigt schematisch den Aufbau des erfindungsgemäßen Cachesystems.

Das dargestellte Cachesystem zur Übertragung von aus großen Datenmengen bestehenden Objekten über ein Kommunikationsnetz besteht im Wesentlichen aus einer Informationsserver-Einheit 1, einer Content-Provider-Server-Einheit 2 und einer Lieferserver-Einheit 3, die durch Kommunikationskanäle 4, 5 und 6 miteinander verbunden sind. An die Lieferserver-Einheit 3 ist über einen weiteren Kommunikationskanal 7 ein Empfänger 8 angeschlossen, zu dem ein Objekt, bspw. ein Multi-Media-Objekt, übertragen werden soll.

Der in der Informationsserver-Einheit 1 vorgesehene Informationsserver 9 bildet die Kernkomponente des gesamten Systems und steuert den Informationsfluss. Die zum Betreiben des Systems notwendigen Informationen werden in einem Betriebsdatenspeicher 10 und einem Metadatenspeicher 11 vorgehalten, die mit dem Informationsserver 9 in Verbindung stehen. Die Metadaten sind einem Objekt direkt zugeordnet und ermöglichen dessen Beschreibung und Identifizierung. Zum einen enthalten die Metadaten Informationen, die die Auswahl eines Objektes ermöglichen. Bei Multi-Media-Objekten sind dies für Musikobjekte bspw. der Musiktitel, der Komponist, der Sänger, die Art der Musik. Zum anderen enthalten die Metadaten die zur Verwaltung und zum Verteilen bzw. Verkaufen der Objekte erforderlichen Informationen. Dies sind eine Objektnummer, eine Versionsnummer bzw. das Erstellungsdatum und -uhrzeit des Objektes, das Datenformat des Objektes und Angaben über den für das Objekt zu benutzenden Service. Dazu zählen eine mögliche Verschlüsselung, ein Sperren oder Löschen des Objektes sowie bei einem Verkauf der Verkaufspreis oder dgl..

Zu den Betriebsdaten zählen Angaben über die zu verwendende Lieferserver-Einheit 3, empfängerspezifische Benutzerdaten, sowie Billing- und Statistikdaten, die einen zentralen Verkauf der Objekte ermöglichen. Ferner beinhalten sie Vorgaben für den im System zu realisierenden Sicherheitsstandard sowie allgemeine Systemdaten, wie bspw. eine Klassifizierung der angebotenen Dienste (Services). Alle diese Betriebsdaten werden von dem Systembetreiber oder durch das System selbst in den Betriebsdatenspeicher 10 eingetragen und gewartet.

Im Gegensatz dazu werden die den Objekten zugeordneten Metadaten von einem in der Content-Provider-Servereinheit 2 vorgesehenen Content-Provider-Server 12 eingestellt. Unter einem Contentprovider wird derjenige verstanden, der die Rechte oder Lizenzen an den zu vertreibenden Objekten hat. Er selbst bearbeitet die Objekte auf seinen Content-Provider-Server 12 und speichert sie in einem zugeordneten Objektspeicher 13 ab, um sie für eine Verteilung zur Verfügung zu stellen. Ferner erzeugt und aktualisiert er die zur Beschreibung der Objekte dienenden Metadaten, die er in einem zugeordneten Metadatenspeicher 19 ablegt oder bearbeitet. Zum Verteilen oder Verkaufen der Objekte muss der Contentprovider die Metadaten der Objekte über den Kommunikationskanal 6 in den Metadatenspeicher 11 des Informationsservers 9 übertragen und dort freischalten. Das Objekt selbst wird nicht übertragen und ist nur innerhalb der Content-Provider-Server-Einheit 2 gespeichert. Nach dem Freischalten des Objektes in den Metadatenspeicher 11 der Informationsserver-Einheit 1 kann das Objekt verteilt oder verkauft werden.

Den Auftrag zum Verteilen oder Verkaufen der Objekte erhält der Informationsserver 9 von einer Auftragserteilungsinstanz 14, bei der der Empfänger 8 über eine Verbindung 15 ein Objekt bestellt hat. Dabei kann die Auftragserteilungsinstanz 14 ein anderer Server, eine Sprachbox oder eine sonstige Einrichtung sein, die über eine geeignete Verbindung 16 mit dem Informationsserver 9 verbunden ist. Der zentrale Informationsserver 9 nimmt den Auftrag entgegen und wertet ihn aus. Dabei überprüft er, ob bei dem Empfängern 8 die Berechtigung zum Empfang des Objektes vorliegt. Falls der Auftrag ausgeführt werden kann, stellt er die zum Liefern des Objektes notwendigen Informationen in einem Auftragspaket zusammen und sendet die Daten über den Kommunikationskanal 4 zu einem in der Lieferserver-Einheit 3 vorgesehenen Lieferserver 17. Der Lieferserver 17 wertet den Auftrag aus und prüft, ob das oder die zu versendenden Objekte in seinem Objekt-Cache 18 verfügbar und aktuell sind. Falls die zu versendenden Objekte in der gewünschten Form vorliegen, werden diese über den Kommunikationskanal 7 zum Empfänger 8 gesandt. Andernfalls werden die Objekte über den weiteren Kommunikationskanal 5 von dem Content-Provider-Server 12 angefordert und geladen. In Abhängigkeit von dem erteilten Auftrag und den für das Objekt angewendeten Caching-Regeln wird das Objekt entweder in den Cache übernommen oder nur zum Empfänger 8 gesendet und nach dem Versenden auf dem Lieferserver 17 gelöscht.

Nach dem Versenden des Objektes wird dem Informationsserver 9 über den Kommunikationskanal 4 der Status des Liefervorgangs mittels eines Quittungspaketes mitgeteilt. Der zentrale Informationsserver 9 wertet das Quittungspaket aus und übernimmt die Daten in eine zentrale Informationsdatenbank, die bspw. in dem Betriebsdatenspeicher 10 abgespeichert ist. Sofern erforderlich informiert der zentrale Informationsserver 9 eine weitere Instanz, z.B. den Content-Provider-Server 12 über den Status des Liefervorgangs. Bei einem Verkaufsvorgang kann ein Billingrecord gemäß dem benutzten Billingmodell erzeugt werden.

Um einen unbefugten Zugriff auf die eingespeicherten Daten zu verhindern, werden die Aufträge zwischen dem Informationsserver 9 und dem Lieferserver 17 sowie eine Anforderung eines Datenobjektes von dem Lieferserver 17 bei dem Content-Provider-Server 12 nur verschlüsselt übersandt. Auch die Einrichtung oder Aktualisierung der Metadaten durch den Content-Provider-Server 12 im Metadatenspeicher 11 des Informationsservers 9 wird entsprechend verschlüsselt vorgenommen.

Um eine unberechtigte Nutzung der Objekte oder eine Manipulationen daran zu verhindern, werden die Objekte von dem Content-Provider-Server 12 beim Übertragen in den Objekt-Cache 18 des Lieferservers 17 mit einem Schlüssel des Contentproviders verschlüsselt und können nur mit dem entsprechenden Schlüssel wieder entschlüsselt werden. Dieser Schlüssel ist bspw. in den Metadaten des Objektes abgelegt und wird dem Empfänger 8 von dem Lieferserver 17 mit übertragen. Ferner können die Objekte mit einem Wasserzeichen oder Fingerprint des Contentproviders, des Systembetreibers oder des Empfängers versehen werden. Diese können vom Empfänger nicht gelöscht werden. Damit kann stets nachvollzogen werden, von wem das Objekt ist, wer es transportiert und wer es empfangen hat. Zusätzlich kann das Objekt vor dem Versenden zum Empfänger 8 mit dem persönlichen Schlüssel des Empfängers verschlüsselt werden, um auch dem Empfänger eine entsprechende Datensicherheit zu gewährleisten. Durch diese Verschlüsselungstechnik kann ein hoher Sicherheitsstandard beim Übertragen von Objekten in Kommunikationsnetzen erreicht werden, der neben einer Manipulation der Objekte auch deren unrechtmäßige Benutzung verhindert oder einen Missbrauch zumindest nachvollziehbar macht.

Nachfolgend wird die Funktionsweise des Informationsservers 9, des Content-Provider-Servers 12 und des Lieferservers 17 näher erläutert:

Auf dem zentralen Informationsserver 9 werden über ein nicht dargestelltes Systemterminal zum Eingeben und Verwalten von Systemdaten die verschiedenen Dienste festgelegt, die von dem System unterstützt werden sollen. Für jeden Dienst wird eine eindeutige Servicenummer vergeben. Es gibt Contentprovider-übergreifende und Contentprovider-spezifische Dienste. Die Contentproviderübergreifenden Dienste teilen sich gemeinsame Systemressourcen, wie bspw. Empfängerverwaltung, Billing, Statistikbearbeitung und gemeinsame Caching-Algorithmen. Die Contentprovider-spezifischen Daten werden dabei so gegeneinander abgegrenzt, dass jeder Contentprovider nur seine eigenen Daten sehen und bearbeiten kann.

Beim initialen Anmelden eines Contentproviders wird erfasst, welche Dienste und Verschlüsselungsverfahren er nutzen möchte. Außerdem kann ein Contentprovider mehrere Content-Provider-Server 12 betreiben. Daher muss er beim Anmelden angeben, welche Kommunikationsart benutzt werden soll und unter welchen Kommunikationsadressen die Content-Provider-Server 12 erreicht werden können. Vom Informationsserver 9 wird eine Content-Provider-Server-Nummer vergeben, die systemweit benutzt wird.

Sollen Daten vom Content-Provider-Server 12 auf den zentralen Informationsserver 9 übernommen werden, muss sich der Content-Provider-Server 12 zunächst anmelden und identifizieren. Nach der Identifizierung können vom Content-Provider-Server 12 die Metadaten der Objekte sowie die Systemdaten, die durch den Contentprovider geändert werden dürfen, neu angelegt oder bearbeitet werden. Zur Identifizierung eines Objektes benutzt der zentrale Informationsserver 9 stets die Objektreferenznummer. Soll ein Objekt gesperrt werden, dann vermerkt der zentrale Informationsserver 9 dies in seiner Datenbank unter der entsprechenden Objektnummer und wird das Objekt bis zur erneuten Freigabe nicht mehr verwenden.

Falls das Objekt direkt oder nach Versendung auf dem Lieferserver 17 gelöscht werden soll, setzt der zentrale Informationsserver 9 an alle Lieferserver 17 einen Löschbefehl ab und löscht die Metadaten zu dem Objekt in seinem Metadatenspeicher 11.

Verteilungs- oder Verkaufsaufträge werden dem zentralen Informationsserver 9 über die Auftragserteilungsinstanz 14 erteilt. Dabei kann festgelegt werden, ob ein Auftrag online oder zu einem späteren Zeitpunkt als Job ausgeführt werden soll, wobei im zweiten Fall beim Auftrag Datum und Uhrzeit übergeben werden müssen.

Zum Ausführen eines Verteilungs- oder Verkaufsauftrages sendet der zentrale Informationssender 9 ein vorzugsweise verschlüsseltes Auftragspaket an den identifizierten Lieferserver 17. Das Auftragspaket enthält die Objektreferenznummer, die Servicenummer, eine Versionsnummer und/oder das Erstellungsdatum und -uhrzeit des Objektes, den Schlüssel zum Verschlüsseln des Objektes, die Kommunikationsadresse des Content-Provider-Servers, die Kommunikationsadresse des Empfängers und ggf. weitere zur Auftragsdurchführung erforderlichen Daten.

Der Lieferserver 17 entschlüsselt zunächst das Auftragspaket. Anhand der Objektnummer identifiziert der Lieferserver das Objekt. Falls es nicht in seinem Objekt-Cache 18 vorhanden ist, wird ggf. eine Verbindung mittels der mitgelieferten Kommunikationsadresse zum Content-Provider-Server 12 aufgebaut und ein verschlüsseltes Anforderungspaket zum Content-Provider-Server gesendet. Parallel wird, falls noch keine Verbindung zum Empfänger 8 existiert, mittels der mitgelieferten Kommunikationsadresse eine Verbindung zum Empfänger aufgebaut. Das von dem Content-Provider-Server 12 gelieferte Objekt wird mit den mitgelieferten Schlüsseln individuell für jeden Empfängern personifiziert. Neben dem Objekt selbst können weitere Daten, z.B. Metadaten des Objekts oder Schlüssel versendet werden, die für die Benutzung des Objektes für den Empfänger 8 wichtig sind.

Bei einem von dem Content-Provider-Server 12 neu gelieferten Objekt wird überprüft, ob es in dem Objekt-Cache 18 des Lieferservers 17 entsprechend den Caching-Regeln gespeichert werden soll. Diese können je nach Service oder Objektklasse verschieden sein. Werden z.B. beim Service "Verteilen von Musik" die Objektklassen MP3 und JPEG benutzt, dann wird gespeichert, wie oft ein Titel innerhalb des definierten Zeitraums versandt wurde. Übertreffen die Zugriffe auf einen neuen Titel in einem definierten Zeitintervall die Anzahl der Zugriffe auf den gecachten Titel, dann wird dieser gelöscht und durch den neuen Titel ersetzt.

Falls neue Services oder neue Objektklassen benutzt werden sollen, müssen diese initial dem Lieferserver 17 mitgeteilt werden, der einen neuen Cache für diesen Service mit den ebenfalls mitgesendeten Caching-Regeln anlegt. Nach der Initialisierung wird der Lieferserver 17 die Objekte entsprechend den Caching-Regeln für den neuen Service speichern. Hierdurch können durch den Informationsserver 9 automatisch neue Services hinzugefügt bzw. gelöscht werden.

Darüber hinaus teilt der zentrale Informationsserver 9 dem Lieferserver 17 mit, ob ein Objekt direkt oder nach erfolgter Lieferung gelöscht werden soll. Bei einer direkten Löschung werden alle laufenden Lieferprozesse zum Bestimmungsort (Empfänger) abgebrochen und das Objekt aus dem Cache gelöscht. Andernfalls werden die anstehenden Lieferungen ausgeführt und das Objekt anschließend gelöscht.

Nach dem Liefervorgang sendet der Lieferserver 17 ein Quittungspaket an den zentralen Informationsserver 9, das den Status des Liefervorgangs und weitere Informationen, wie z.B. Billinginformationen enthält. Das Quittungspaket kann ebenfalls verschlüsselt werden.

Der Content-Provider-Server ist für die Aufbereitung und Pflege der Objekte sowie der Metadaten zuständig. Die Objekte und die Metadaten sowie die dynamischen Daten werden hier erfasst und gespeichert. Der Content-Provider-Server 12 baut über den Kommunikationskanal 6 eine Verbindung zum Informationsserver 9 auf, falls Metadaten oder dynamischen Daten auf dem Informationsserver 9 aktualisiert werden sollen. Dem Informationsserver 9 wird zur Identifizierung des Objektes eine Contentprovidernummer, eine Servicenummer und eine Objektnummer übermittelt. Außerdem werden zum Informationsserver 9 das Erstellungsdatum und die Erstellungsuhrzeit bzw. die Version des Objektes übertragen. Die Contentprovidernummer und die Servicenummer muss im gesamten System eindeutig sein, die Objektnummer muss dagegen nur für jeden Content-Provider-Server 12 eindeutig vergeben werden. Die Contentprovidernummer und die Objektnummer bilden die Objektreferenz, die im gesamten System nur einmal vorhanden ist.

Bei einer Benutzung dieses Caching-Verfahrens im Internet würde ein Empfänger über seinen Internet-Service-Provider bspw. einen Auftrag zum Kaufen eines Multi-Media-Objektes, z.B. eines Musikstücks, dem zentralen Informationsserver 9 zuleiten. Dieser sorgt dafür, dass das Objekt von einem Einwahl-POP (Lieferserver 17) zu dem Empfänger gesandt wird. Dies kann über eine Internet-Kommunikationsschnittstelle 7 geschehen. Es ist aber auch möglich, dass zwischen dem Empfänger 8 und dem Einwahl-POP eine Kommunikationsverbindung 7 mit garantierter Bandbreite vorgesehen ist. Dann kann das Objekt mit der garantierten Bandbreite in entsprechend kurzer Zeit zu dem Empfänger übertragen werden, ohne dass Internet-bedingte Bandbreitenschwankungen auftreten. Dadurch lässt sich die Sicherheit der Übertragung weiter erhöhen.

Da das System aus Informationsserver 9, Content-Provider-Server 12 und Lieferserver 17 auf herkömmliche Kommunikationstechniken zurückgreift, können bestehende Kommunikations-Infrastrukturen an das neue Caching-Verfahren angepasst werden.

### Bezugszeichenliste:

- 1: Informationsserver-Einheit
- 2: Content-Provider-Server-Einheit
- 3: Lieferserver-Einheit
- 4: Kommunikationskanal
- 5: Kommunikationskanal
- 6: Kommunikationskanal
- 7: Kommunikationskanal
- 8: Empfänger
- 9: Informationsserver
- 10: Betriebsdatenspeicher
- 11: Metadatenspeicher
- 12: Content-Provider-Server
- 13: Objektspeicher
- 14: Auftragserteilungsinstanz
- 15: Verbindung
- 16: Verbindung
- 17: Lieferserver
- 18: Objekt-Cache
- 19: Metadatenspeicher

## Patentansprüche

1. Caching-Verfahren zum Übertragen von aus großen Datenmengen bestehenden Objekten, insbesondere Multi-Media-Objekten oder dgl., über ein Kommunikationsnetz wie bspw. das Internet, Intranet oder Extranet, bei dem die Objekte von wenigstens einem Content-Provider-Server zur Verfügung gestellt, in jeweils einem Lieferserver mit einem Objekt-Cache zwischengespeichert und zu beliebigen Empfängern übertragen werden, wobei das Cachingverfahren folgende Verfahrensschritte beinhaltet,
dass ein zentraler Informationsserver (9) vorgesehen ist, auf dessen Datenbanken mit Ausnahme der eigentlichen Objekte alle zur Durchführung des Caching-Verfahrens notwendigen Informationen eingestellt, verwaltet und gespeichert werden, wobei es sich bei den Informationen einerseits um Metadaten handelt, die es ermöglichen, ein Objekt auszuwählen, zu verwalten und zu verteilen, und andererseits um Betriebsdaten,
dass die Objekte und die Metadaten der Objekte auf dezentralen Content-Provider-Servern (12) erfaßt, bearbeitet und gespeichert werden,
dass die vom Content-Provider-Server (12) eingestellten Metadaten über einen Kommunikationskanal (6) zum Informationsserver (9) übertragen und aktualisiert werden,
dass der Informationsserver (9) den Auftrag zur Übertragung eines Objektes entgegennimmt, auswertet und die zum Liefern des Objektes notwendigen Informationen zusammenstellt und über einen Kommunikationskanal (4) zu einem ausgewählten Lieferserver (17) überträgt,
dass der Lieferserver (17) die Auftragsdaten annimmt und den Auftrag auswertet,
dass der Lieferserver (17) für den Fall, dass das zu versendende Objekt in seiner aktuellen Fassung im Objekt-Cache (18) des Lieferservers (17) verfügbar ist, dieses über einen Kommunikationskanal (7) zu dem Empfänger (8) überträgt und
dass für den Fall, dass das zu versendende Objekt nicht oder nicht in seiner aktuellen Fassung im Objekt-Cache (18) des Lieferservers (17) verfügbar ist, der Lieferserver über einen Kommunikationskanal (5) das Objekt von dem Content-Provider-Server (12) anfordert und über einen Kommunikationskanal (7) zum Empfänger (8) weiterleitet.

2. Caching-Verfahren nach Anspruch 1, **dadurch gekennzeichnet, dass** die Metadaten objektorientierte Daten in Form von Objektreferenznummern, Versionsangaben, Servicevorgaben, Schlüssel zum Verschlüsseln der Objekte, Textbeschreibungen der Objekte, Verkaufspreise und dgl. Informationen über die Objekte enthalten.

3. Caching-Verfahren nach Anspruch 1, **dadurch gekennzeichnet, dass** auf dem zentralen Informationsserver (9) die vom System unterstützten Dienste festgelegt werden, denen jeweils eindeutige Servicenummer zugeordnet werden.

4. Caching-Verfahren nach Anspruch 1, **dadurch gekennzeichnet, dass** Contentprovider-spezifische Dienste und Contentprovider-übergreifende Dienste vorgesehen sind, von denen letztere sich gemeinsame Ressourcen wie Empfängerverwaltung, Billing, Statistikbearbeitung und Caching-Algorithmen teilen.

5. Caching-Verfahren nach einem der Ansprüche 1 bis 4, **dadurch gekennzeichnet, dass** die Daten der einzelnen Contentprovider gegeneinander abgegrenzt sind.

6. Caching-Verfahren nach Anspruch 1, **dadurch gekennzeichnet, dass** die zum Liefern der Objekte notwendigen Informationen Objektreferenznummern, Servicenummern, Versionsangaben, Schlüssel zum Verschlüsseln der Objekte, Kommunikationsadressen der Content-Provider-Server (12), Kommunikationsadressen der Empfänger (8) und/oder je nach Diensteanforderungen weitere Informationen enthalten.

7. Caching-Verfahren nach einem der vorhergehenden Ansprüche, **dadurch gekennzeichnet, dass** die Auswahl des Lieferservers (17) voreingestellt ist oder dynamisch erfolgt.

8. Caching-Verfahren nach einem der vorhergehenden Ansprüche, **dadurch gekennzeichnet, dass** die Datenübertragung zwischen dem Informationsserver (9), den Content-Provider-Servern (12) und/oder den Lieferservern (17) über die Kommunikationskanäle (6,4,5) verschlüsselt erfolgt.

9. Caching-Verfahren nach einem der Ansprüche 1 bis 8, **dadurch gekennzeichnet, dass** die Objekte durch den Contentprovider verschlüsselt werden.

10. Caching-Verfahren nach einem der vorhergehenden Ansprüche, **dadurch gekennzeichnet, dass** die Objekte mit einem persönlichen Schlüssel des Empfängers verschlüsselt werden.

11. Caching-Verfahren nach einem der vorhergehenden Ansprüche, **dadurch gekennzeichnet, dass** die Objekte mit Wasserzeichen oder Fingerprints der Contentprovider, der Systembetreiber und/oder der Empfänger versehen werden.

12. Caching-Verfahren nach einem der vorhergehenden Ansprüche, **dadurch gekennzeichnet, dass** der Lieferserver (17) nach Durchführung eines Auftrags dem zentralen Informationsserver (9) über einen Kommunikationskanal (4) mittels eines Quittungspakets den Status des Auftrags und/oder weitere Informationen, bspw. Billinginformationen mitteilt.

13. Caching-Verfahren nach Anspruch 1, **dadurch gekennzeichnet, dass** so sich bei den Betriebsdaten um Lieferserverdaten, Benutzerdaten, Billingdaten, Statistikdaten, Content-Provider-Daten und Sicherheitsdaten handelt.

14. Cachesystem zur Übertragung von aus großen Datenmengen bestehenden Objekten über ein Kommunikationsnetz mittels eines Verfahrens nach einem der Ansprüche 1 bis 13, mit mindestens einen einen Objektspeicher (13) aufweisenden Content-Provider-Server (12) zum Erzeugen und Vorhalten der Objekte und mindestens einen mit dem Content-Provider-Server (12) über einen Kommunikationskanal (5) verbundenen Lieferserver (17) zum Zwischenspeichern der Objekte in einem Objekt-Cache und zum Versenden der Objekte zu einem Empfänger (8), **dadurch gekennzeichnet, daß** ein Informationsserver (9) ausgebildet ist zur Steuerung des Lieferservers (17) und einen Betriebsdatenspeicher (10) und einen Metadatenspeicher (11) aufweist zum Speichern der zum Cachingverfahren notwendigen Informationen.

15. Cachesystem nach Anspruch 14, **dadurch gekennzeichnet, dass** der Informationsserver (9) Kommunikationsschnittstellen mit der Auftragserteilungsinstanz (14), den Content-Provider-Servern (12) und den Lieferservern (9) aufweist.

16. Cachesystem nach Anspruch 14, **dadurch gekennzeichnet, dass** der Informationsserver (9) ein Systemterminal aufweist.

17. Cachesystem nach Anspruch 14, **dadurch gekennzeichnet, dass** der Informationsserver (9), der/die Content-Provider-Server (12) und der/die Lieferserver (17) jeweils über Kommunikationskanäle (4,5,6,) miteinander verbunden sind.

18. Cachesystem nach einem der Ansprüche 14 bis 17, **dadurch gekennzeichnet, dass** der Content-Provider-Server (12) einen Metadatenspeicher (19) aufweist.

19. Cachesystem nach einem der Ansprüche 14 bis 18, **dadurch gekennzeichnet, dass** der Informationsserver (9), der/die Content-Provider-Server (12) und/oder der/die Lieferserver (17) Ver- und Entschlüsselungseinrichtungen aufweisen.

20. Cachesystem nach einem der Ansprüche 14 bis 19, **dadurch gekennzeichnet, dass** der Informationsserver (9), der/die Content-Provider-Server (12) und/oder der/die Lieferserver (17) jeweils aus einem Cluster von Einzelservern bestehen.

## Claims

1. Caching method for transferring objects consisting of large amounts of data, especially multimedia objects or the like, by way of a communications network such as, for example, the internet, an intranet or extranet, wherein the objects are made available by at least one content provider server, are intermediately stored in a respective delivery server having an object cache and transferred to any desired recipient, the caching method comprising the following method steps:
a central information server (9) is provided, on whose databases all information necessary for carrying out the caching method with the exception of the objects themselves is set up, managed and stored, the information comprising on the one hand metadata, which makes it possible to select, manage and distribute an object, and on the other hand operating data,
the objects and the metadata of the objects are registered, processed and stored on decentralised content provider servers (12),
the metadata set up by the content provider server (12) is transferred to the information server (9) and updated by way of a communications channel (6),
the information server (9) accepts and evaluates an instruction for the transfer of an object and compiles and transfers to a selected delivery server (17), by way of a communications channel (4), the information necessary for delivery of the object,
the delivery server (17) accepts the instruction data and evaluates the instruction,
in the case where the object to be sent is available in its current version in the object cache (18) of the delivery server (17), the delivery server (17) transfers it to the recipient (8) by way of a communications channel (7) and
in the case where the object to be sent is not available, or not available in its current version, in the object cache (18) of the delivery server (17), the delivery server requests the object from the content provider server (12) by way of a communications channel (5) and forwards it to the recipient (8) by way of a communications channel (7).

2. Caching method according to claim 1, **characterised in that** the metadata comprises object-oriented data in the form of object reference numbers, version details, service specifications, keys for encrypting the objects, text descriptions of the objects, selling prices and like information relating to the objects.

3. Caching method according to claim 1, **characterised in that** on the central information server (9) there are specified the services supported by the system, each of which is assigned a unique service number.

4. Caching method according to claim 1, **characterised in that** content-provider-specific services and content-provider-independent services are provided, the latter of which share common resources such as recipient management, billing, statistics processing and caching algorithms.

5. Caching method according to one of claims 1 to 4, **characterised in that** the data of the individual content providers is respectively demarcated.

6. Caching method according to claim 1, **characterised in that** the information necessary for delivery of the objects comprises object reference numbers, service numbers, version details, keys for encrypting the objects, communication addresses of the content provider servers (12), communication addresses of the recipients (8) and/or further information depending on service requirements.

7. Caching method according to one of the preceding claims, **characterised in that** the selection of the delivery server (17) is pre-set or is performed dynamically.

8. Caching method according to one of the preceding claims, **characterised in that** the data transfer between the information server (9), the content provider servers (12) and/or the delivery servers (17) by way of the communications channels (6,4,5) is carried out in encrypted form.

9. Caching method according to one of claims 1 to 8, **characterised in that** the objects are encrypted by the content provider.

10. Caching method according to one of the preceding claims, **characterised in that** the objects are encrypted using a personal key of the recipient.

11. Caching method according to one of the preceding claims, **characterised in that** the objects are provided with watermarks or fingerprints of the content providers, of the system operators and/or of the recipients.

12. Caching method according to one of the preceding claims, **characterised in that** after carrying out an instruction the delivery server (17) communicates to the central information server (9) by way of a communications channel (4), by means of an acknowledgement packet, the status of the instruction and/or further information, for example billing information.

13. Caching method according to claim 1, **characterised in that** the operating data comprises delivery server data, user data, billing data, statistics data, content provider data and security data.

14. Cache system for transferring objects consisting of large amounts of data by way of a communications network by means of a method according to one of claims 1 to 12, having at least one content provider server (12) comprising an object store (13) for creating and keeping the objects, and having at least one delivery server (17), connected to the content provider server (12) by way of a communications channel (5), for intermediate storage of the objects in an object cache and for sending the objects to a recipient (8), **characterised in that** an information server (9) is arranged to control the delivery server (17) and, for storing the information necessary for the caching method, has an operating data store (10) and a metadata store (11).

15. Cache system according to claim 14, **characterised in that** the information server (9) has communication interfaces with the instruction-giving entity (14), the content provider servers (12) and the delivery servers (9).

16. Cache system according to claim 14, **characterised in that** the information server (9) has a system terminal.

17. Cache system according to claim 14, **characterised in that** the information server (9), the content provider server(s) (12) and the delivery server(s) (17) are each connected to one another by way of communications channels (4,5,6).

18. Cache system according to one of claims 14 to 17, **characterised in that** the content provider server (12) has a metadata store (19).

19. Cache system according to one of claims 14 to 18, **characterised in that** the information server (9), the content provider server(s) (12) and/or the delivery server(s) (17) have encryption and decryption devices.

20. Cache system according to one of claims 14 to 19, **characterised in that** the information server (9), the content provider server(s) (12) and/or the delivery server(s) (17) in each case consist of a cluster of individual servers.

## Revendications

1. Procédé de mise en mémoire cache permettant de transmettre des objets contenant de grandes quantités de données, en particulier des objets multimédia ou similaires, par l'intermédiaire d'un réseau de communication tel que l'internet, l'intranet ou l'extranet, dans lequel les objets sont mis à disposition par au moins un serveur de fournisseur de contenu (Content-Provider-Server), sont mémorisés temporairement dans un serveur de prestataire de services à l'aide d'une mémoire cache d'objets, et sont transmis aux destinataires souhaités, le procédé de mise en mémoire cache comprenant les étapes de procédé suivantes :
un serveur d'informations centralisé (9) est prévu, sur les bases de données duquel toutes les informations nécessaires à la mise en oeuvre du procédé de mise en mémoire cache sont mises en place, gérées et mémorisées, à l'exception des objets proprement dits, les informations étant d'une part des métadonnées qui permettent de sélectionner, de gérer et de répartir un objet, et d'autre part des données d'exploitation,
les objets et les métadonnées des objets sont saisis, traités et mémorisés sur des serveurs de fournisseur de contenu (12) décentralisés,
les métadonnées mises en place par le serveur de fournisseur de contenu (12) sont transmises par l'intermédiaire d'un canal de communication (6) au serveur d'informations (9) et actualisées,
le serveur d'informations (9) reçoit la commande de transmission d'un objet, l'évalue et regroupe les informations nécessaires à la délivrance de l'objet, et la transmet par l'intermédiaire d'un canal de communication (4) à un serveur de prestataire de services (17) sélectionné,
le serveur de prestataire de services (17) reçoit les données de la commande et évalue la commande,
le serveur de prestataire de services (17), au cas où l'objet à envoyer est disponible dans sa version actuelle dans la mémoire cache d'objets (18) du serveur de prestataire de services (17), le transmet au destinataire (8) par l'intermédiaire d'un canal de communication (7), et
au cas où l'objet à envoyer n'est pas disponible, ou s'il n'est pas disponible dans sa version actuelle dans la mémoire cache d'objets (18) du serveur de prestataire de services (17), le serveur de prestataire de services demande l'objet au serveur de fournisseur de contenu (12) par l'intermédiaire d'un canal de communication (5) et le transmet au destinataire (8) par l'intermédiaire d'un canal de communication (7).

2. Procédé de mise en mémoire cache selon la revendication 1, **caractérisé en ce que** les métadonnées contiennent des données concernant l'objet sous la forme de numéros de référence d'objet, d'indications de version, de spécifications de service, de clés permettant de coder les objets, de descriptions textuelles des objets,de prix de vente ou d'informations similaires sur les objets.

3. Procédé de mise en mémoire cache selon la revendication 1, **caractérisé en ce que,** sur le serveur d'informations centralisé (9), les services pouvant être fournis par le système sont définis, et on leur affecte respectivement un numéro de service univoque.

4. Procédé de mise en mémoire cache selon la revendication 1, **caractérisé en ce qu'**on prévoit des services spécifiques au fournisseur de contenu et des services allant au-delà du fournisseur de contenu, ces derniers se partageant des ressources communes telles que la gestion de destinataires, la facturation, le traitement des statistiques et les algorithmes de mise en mémoire cache.

5. Procédé de mise en mémoire cache selon l'une quelconque des revendications 1 à 4, **caractérisé en ce que** les données des différents fournisseurs de contenu sont séparées les unes des autres.

6. Procédé de mise en mémoire cache selon la revendication 1, **caractérisé en ce que** les informations nécessaires pour délivrer les objets contiennent des numéros de référence d'objet, des numéros de service, des indications de version, des clés permettant de coder les objets, des adresses de communication du serveur de fournisseur de contenu (12), des adresses de communication des destinataires (8) et/ou, en fonction des services demandés, d'autres informations.

7. Procédé de mise en mémoire cache selon l'une des revendications précédentes, **caractérisé en ce que** la sélection du serveur de prestataire de services (17) est prédéfinie ou est réalisée de façon dynamique.

8. Procédé de mise en mémoire cache selon l'une des revendications précédentes, **caractérisé en ce que** la transmission de données est réalisée de manière codée entre le serveur d'informations (9), les serveurs de fournisseur de contenu (12) et/ou les serveurs de prestataire de services (17) par l'intermédiaire des canaux de communication (6, 4, 5).

9. Procédé de mise en mémoire cache selon l'une des revendications 1 à 8, **caractérisé en ce que** les objets sont codés par le fournisseur de contenu.

10. Procédé de mise en mémoire cache selon l'une des revendications précédentes, **caractérisé en ce que** les objets sont codés à l'aide d'une clé personnelle du destinataire.

11. Procédé de mise en mémoire cache selon l'une des revendications précédentes, **caractérisé en ce que** les objets sont dotés de filigranes ou d'empreintes digitales du fournisseur de contenu, de l'exploitant du système et/ou du destinataire.

12. Procédé de mise en mémoire cache selon l'une des revendications précédentes, **caractérisé en ce que** le serveur de prestataire de services (17), après la réalisation d'une commande, communique l'état de la commande et/ou d'autres informations, par exemple des informations de facturation, au serveur d'informations centralisé (9) par l'intermédiaire d'un canal de communication (4) à l'aide d'un paquet d'accusé de réception.

13. Procédé de mise en mémoire cache selon la revendication 1, **caractérisé en ce que** les données d'exploitation sont les données sur le serveur de prestataire de services, des données d'utilisateur, des données de facturation, des données statistiques, des données sur le fournisseur de contenu et des données de sécurité.

14. Système de mise en mémoire cache permettant de transmettre des objets comportant de grandes quantités de données par l'intermédiaire d'un réseau de communication à l'aide d'un procédé selon l'une des revendications 1 à 12, comportant au moins un serveur de fournisseur de contenu (12) présentant une mémoire d'objets (13), permettant de générer et de conserver les objets et au moins un serveur de prestataire de services (17) relié au serveur de fournisseur de contenu (12) par l'intermédiaire d'un canal de communication (5), afin de mémoriser temporairement les objets dans une mémoire cache d'objets et d'envoyer les objets à un destinataire (8), **caractérisé en ce qu'**un serveur d'informations (9) est configuré afin de commander le serveur de prestataire de services (17), et présente une mémoire de données d'exploitation (10) et une mémoire de métadonnées (11) afin de mémoriser les informations nécessaires au procédé de mise en mémoire cache.

15. Système de mise en mémoire cache selon la revendication 14, **caractérisé en ce que** le serveur d'informations (9) présente des interfaces de communication avec l'instance délivrant les commandes (14), les serveurs de fournisseur de contenu (12) et les serveurs de prestataire de services (9).

16. Système de mise en mémoire cache selon la revendication 14, **caractérisé en ce que** le serveur d'informations (9) présente un terminal système.

17. Système de mise en mémoire cache selon la revendication 14, **caractérisé en ce que** le serveur d'informations (9), le/les serveurs de fournisseur de contenu (12) et le/les serveurs de prestataire de services (17) sont reliés les uns aux autres par l'intermédiaire de canaux de communication (4, 5, 6).

18. Système de mise en mémoire cache selon l'une des revendications 14 à 17, **caractérisé en ce que** le serveur de fournisseur de contenu (12) présente une mémoire de métadonnées (19).

19. Système de mise en mémoire cache selon l'une des revendications 14 à 18, **caractérisé en ce que** le serveur d'informations (9), le/les serveurs de fournisseur de contenu (12) et/ou le/les serveurs de prestataire de services (17) présentent des dispositifs de codage et de décodage.

20. Système de mise en mémoire cache selon l'une des revendications 14 à 19, **caractérisé en ce que** le serveur d'informations (9), le/les serveurs de fournisseur de contenu (12) et/ou le/les serveurs de prestataire de services (17) sont chacun constitués d'une grappe de serveurs individuels.
